# EUROPEAN PATENT APPLICATION

(11) **EP 3 460 223 A1**
(43) Date of publication of application: **27.03.2019**
(21) Application number: 17799008.2
(22) Date of filing: 22.03.2017
(51) Int. Cl.: F02D 41/34, F02B 23/10, F02D 41/02, F02D 41/04, F02F 1/24, F02M 51/00, F02M 61/14

(54) **INTERNAL COMBUSTION ENGINE CONTROL DEVICE**

(30) Priority: 19.05.2016 JP 2016100046
(71) Applicant: Hitachi Automotive Systems, Ltd., Hitachinaka-shi, Ibaraki 312-8503 (JP)
(72) Inventor: SUKEGAWA, Yoshihiro, Tokyo 100-8280 (JP); KIHARA, Yuusuke, Tokyo 100-8280 (JP)
(74) Representative: MERH-IP Matias Erny Reichl Hoffmann Patentanwälte PartG mbB
(86) International application number: PCT/JP2017/011296
(87) International publication number: WO 2017/199574

(57) **Abstract**

Stratified air-fuel mixture is stably formed around an ignition plug during a stratified charge combustion operation. For this reason, to solve the above problem, the present invention provides an internal combustion engine control device for controlling an internal combustion engine. The internal combustion engine includes: a fluid injection valve provided along an axial direction of an ignition plug; and a fuel injection valve formed separately from the fluid injection valve and provided in a direction intersecting with the axial direction of the fluid injection valve, and the internal combustion engine control device includes a control unit which controls the fluid injection valve and the fuel injection valve so as to inject fluid from the fuel injection valve after injecting fluid from the fluid injection valve in a compression stroke.

## Description

### Technical Field

The present invention relates to an internal combustion engine control device, and in particular to a device for controlling a fuel injection valve of a spark ignition type internal combustion engine.

### Background Art

To realize both stratified charge combustion (fuel lean combustion) and homogeneous combustion with high performance, a method of providing two fuel injectors for one cylinder is proposed. For example, PTL 1 disclose a method in which two in-cylinder injectors with different static flow are provided in one cylinder, a homogeneous air-fuel mixture is formed by a fuel injector with high static flow, and a stratified air-fuel mixture is formed by a fuel injector with low static flow.

### Citation List

### Patent Literature

PTL 1: JP 2010-196506 A

### Summary of Invention

### Technical Problem

Stratified charge combustion is a method of reducing pumping loss caused by throttle throttling by sucking air into a combustion chamber such that an operating air-fuel ratio is larger than a stoichiometric mixture ratio. However, to achieve stable combustion under this condition, it is necessary to stratify air-fuel mixture of an appropriate equivalence ratio (approximately 1) near an ignition plug.

According to the method disclosed in PTL 1, fuel injected in a piston direction is carried to the periphery of an ignition plug by tumble flow (longitudinal vortex) generated when air flows into a cylinder from an intake port. However, since the strength and form of the tumble flow vary depending on an engine speed and load, it is difficult to stably form a stratified air-fuel mixture.

As another method of forming the stratified air-fuel mixture, there is also a so-called spray guide method in which a fuel injection valve is disposed in the vicinity of an ignition plug, and fuel spray from the injection valve is directly supplied to the vicinity of the ignition plug. However, there has been a problem that unvaporized fuel adheres to the ignition plug and tends to cause smoldering easily. Therefore, an object of the present invention is to form a stratified air-fuel mixture stably around the ignition plug.

### Solution to Problem

To solve the above problem, the present invention provides an internal combustion engine control device for controlling an internal combustion engine. The internal combustion engine includes: a fluid injection valve provided along an axial direction of an ignition plug; and a fuel injection valve formed separately from the fluid injection valve and provided in a direction intersecting with the axial direction of the fluid injection valve, and the internal combustion engine control device includes a control unit which controls the fluid injection valve and the fuel injection valve so as to inject fluid from the fuel injection valve after injecting fluid from the fluid injection valve in a compression stroke.

### Advantageous Effects of Invention

According to the above solution, an air flow directed from a piston surface to an ignition plug is formed, and by this air flow, a stratified air-fuel mixture is stably formed around the ignition plug. Other detailed configurations, operations, and effects of the present invention will be described in detail in the following embodiments.

### Brief Description of Drawings

FIG. 1 illustrates a configuration of an intake pipe cross section according to an embodiment of the present invention.
FIG. 2 illustrates a configuration of a cylinder center cross section of the embodiment of the present invention.
FIG. 3 is a map for switching combustion modes with respect to engine speed and engine torque.
FIG. 4 is a fuel injection/ignition timing chart in each combustion mode.
FIG. 5 illustrates fuel behavior and gas flow in the embodiment of the present invention.
FIG. 6 illustrates a definition of a crossing angle θ.
FIG. 7 illustrates a definition of a request Δt.
FIG. 8 indicates a change in the request Δt with respect to the crossing angle θ.
FIGS. 9 illustrate in-cylinder air flow when the crossing angle θ is 90°. FIG. 9(a) illustrates in-cylinder air flow when Δt = 0, and FIG. 9(b) illustrates in-cylinder air flow when Δt> 0.
FIGS. 10 illustrate in-cylinder air flow when the crossing angle θ << 90°. FIG. 10(a) illustrates in-cylinder air flow when Δt = 0, and FIG. 10(b) illustrates in-cylinder air flow when Δt > 0.
FIG. 11 is an example of a fuel injection/ignition timing chart in a stratified charge combustion mode in the embodiment of the present invention.
FIG. 12 is another example of a fuel injection/ignition timing chart in the stratified charge combustion mode in the embodiment of the present invention.
FIG. 13 illustrates an injection quantity ratio of a fluid injection valve and a fuel injection valve in the embodiment of the present invention.
FIG. 14 illustrates injection timings of a fluid injection valve and a fuel injection valve in the embodiment of the present invention.

### Description of Embodiments

An embodiment of the present invention will be described below with reference to the drawings. Embodiment

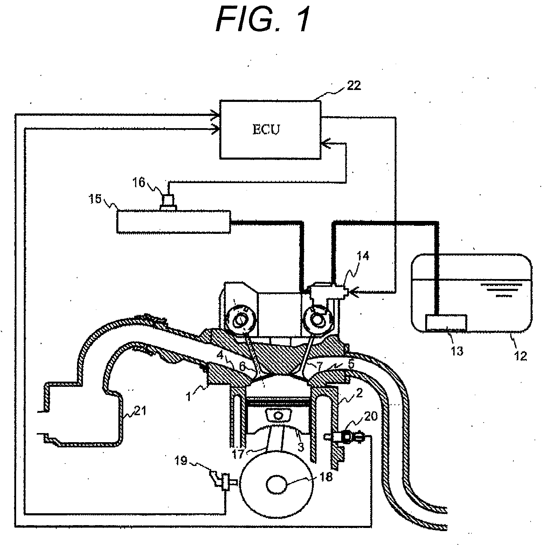

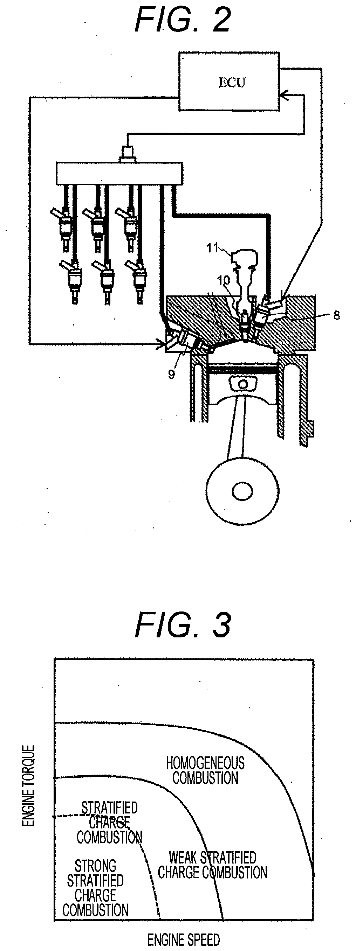

FIGS. 1 and 2 illustrate a configuration of a direct injection engine according to an embodiment of the present invention. In the configuration, an inline-four cylinder naturally aspirated engine is applied. FIG. 1 illustrates an outline of the configuration. FIG. 2 illustrates a mounting position of a fuel injector on a cylinder center cross section.

A combustion chamber is formed by a cylinder head 1, a cylinder block 2, and a piston 3 inserted in the cylinder block. An intake pipe 4 and an exhaust pipe 5 are branched into two for each cylinder toward the combustion chamber. Two intake valves 6 and two exhaust valves 7 are provided so as to open and close an opening portion. The intake valve 4 and the exhaust valve 5 are of a cam operation type and rotate in conjunction with a crank shaft 16. A cam profile is commonly used, and the time when the exhaust valve closes and the time when the intake valve starts to open are set as a top dead center.

Two fuel injectors are provided to one cylinder, and a first fuel injector 8 is provided in an axial upper portion and in a radial direction center portion of the cylinder. Furthermore, a second fuel injector 9 is provided on an upper side of the cylinder and on an outer side in a radial direction of the intake valve. An ignition plug 10 and an ignition coil 11 are disposed between the exhaust pipes 4. Note that the first fuel injector 8 is not necessarily a fuel injector but may be a fluid injection valve for injecting fluid. That is, in the present embodiment, an internal combustion engine (direct injection engine) includes a fluid injection valve (first fuel injector 8) provided along an axial direction of the ignition plug 10, and a fuel injection valve (second fuel injector 9) which is formed separately from the fluid injection valve (first fuel injector 8) and provided in a direction intersecting with the axial direction of the fluid injection valve (first fuel injector 8). Note that the fluid injection valve (first fuel injector 8) is provided adjacent to the ignition plug 10, and an angle formed by an axial direction of the fluid injection valve (first fuel injector 8) and a cylinder central axis direction is in a range of 0 to 45°. Nozzle tips of the fluid injection valve and the fuel injection valve are inserted into the combustion chamber of the internal combustion engine.

A fuel is stored in a fuel tank 12 and sent to a high-pressure pump 14 through a fuel pipe by a feed pump 13. The high-pressure fuel pump 14 is driven by an exhaust cam, and a pressurized fuel is sent to a common rail 15. The feed pump 13 boosts a fuel to about 0.3 MPa and sends it to the high-pressure pump 14, and the high-pressure pump 14 can further boost the fuel up to about 15 MPa and send it to the common rail 15. The fuel pressure sensor 16 is disposed in the common rail 15 such that fuel pressure can be detected. Two fuel injectors per cylinder, a total of eight fuel injectors, are connected to an end of the common rail 16.

The piston 3 is connected to a crank shaft 18 via a connecting rod 17, and a crank angle sensor 19 can detect engine speed. A starter motor (not illustrated) is connected to the crank shaft 18 such that the crank shaft can be rotated by the starter motor upon starting an engine. A water temperature sensor 20 is attached to a cylinder block such that a temperature of engine cooling water can be detected. A collector 21 is connected upstream of the intake pipe 4. An air flow sensor and a throttle valve
(not illustrated) are provided upstream of the collector, such that an amount of air taken into the combustion chamber can be adjusted by opening and closing the throttle. In the figure, only one cylinder is described, but air is distributed from the collector to each cylinder.

An engine control unit (ECU) 22 monitors signals from various sensors and is connected to control devices such as the first fuel injector 8, the second fuel injector 9, the ignition plug 10, and the high-pressure fuel pump 14. In the ROM of the ECU 22, setting values of various devices according to an engine speed, a water temperature, and an air-fuel ratio which are generally used are recorded as map data. The ECU 22 includes a central processing unit (CPU) (not illustrated), and this CPU functions as a control unit of each device. FIG. 3 is an example of an operation map of the internal combustion engine in the present embodiment. FIG. 3 is an example of an operation mode with respect to engine speed and engine torque of the internal combustion engine in the present embodiment. The internal combustion engine of the present embodiment is operated in a stratified charge combustion mode when the engine speed and torque are low to medium.

The stratified charge combustion mode can be divided into two types: a strong stratified charge combustion mode and a weak stratified charge combustion mode. The strong stratified charge combustion mode is used at a lower revolution speed and in a lower torque range and is set to a large air-fuel ratio (for example, A/F > 30) to increase the fuel concentration degree (stratification level) around the ignition plug 10. On the other hand, the weak stratified charge combustion mode is used at a higher revolution speed and in a higher torque range and is set to a hollow fuel ratio (for example, 16 < A/F <30), and the stratification level is lower than the strong stratified charge combustion mode. Note that, if the engine speed and torque are higher, the engine is operated in a homogeneous combustion mode.

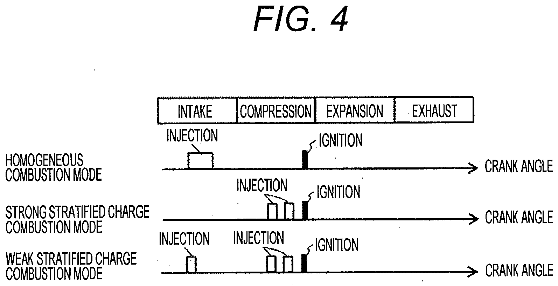

FIG. 4 is a fuel injection/ignition timing chart. In the homogeneous combustion mode, fuel is injected in an intake stroke. In the strong stratified charge combustion mode, at least two injections are performed in a compression stroke and before an ignition timing. In the weak stratified charge combustion mode, at least one injection is performed in the intake stroke, and at least twice injections are performed in the compression stroke and before the ignition timing.

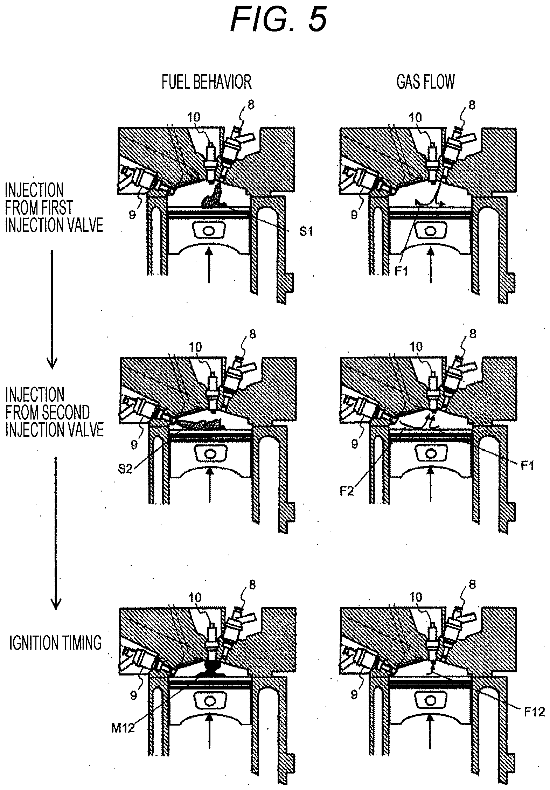

Next, fuel behavior of the stratified charge combustion mode in the present embodiment will be described with reference to FIG. 5. FIG. 5 indicates the form of a fuel (spray and vaporized fuel) in the combustion chamber in the stratified charge combustion mode in the present embodiment and a gas flow direction. As illustrated in FIGS. 4 and 5, in the compression stroke, the control unit of the ECU 22 injects fluid from the fluid injection valve (first fuel injector 8) and then injects fluid from the fuel injection valve (the second fuel injector 9) and controls the injection timing of the fluid injection valve and the fuel injection valve so as to inject the fuel. Note that the control unit performs fuel injection from the fuel injection valve (second fuel injector 9) at a timing before the ignition timing of the ignition plug 10 and controls the fluid injection from the fluid injection valve (first fuel injector 8) at a timing before the ignition timing of the ignition plug 10 and fuel injection from the fuel injection valve. In addition, the control unit performs the above-described control in the case where the internal combustion engine is operated with an air-fuel mixture leaner than the stoichiometric mixture ratio combustion engine and in a compression stroke of the internal combustion engine.

More specifically, a fuel S1 is injected in the form of spray from the first fuel injector 8 adjacent to the ignition plug 10 toward an upper surface of the piston in a latter stage of the compression stroke and before the ignition timing. Since friction drag acts between the fuel S1 and an in-cylinder gas, a gas flow F1 is formed from a nozzle tip of the first fuel injector 8 to the second fuel injector 9 along the upper surface of the piston. The fuel S1 (spray) receives the in-cylinder gas and the heat from the piston 3 and vaporizes in the vicinity of the upper surface of the piston.

Subsequently, a fuel S2 is injected in the form of spray from the second fuel injector 9 toward the center of the combustion chamber before the ignition timing. A gas flow F2 is formed from the nozzle tip of the second fuel injector 9 toward the center of the combustion chamber along the upper surface of the piston by frictional drag acting between the fuel S2 and an in-cylinder gas. The gas flow F2 and the gas flow F1 formed by the previous fuel injection by the first fuel injector 8 are opposite in flow direction and collide with each other near the upper surface of the piston below the ignition plug, and an upward flow F12 is formed. In addition, the fuel S2 (spray) receives heat from the in-cylinder gas and the piston 3 and vaporizes in the vicinity of the upper surface of the piston. An air-fuel mixture M12 formed by mixing the fuel S1, fuel S2, and in-cylinder air is carried from the vicinity of the upper surface of the piston to the vicinity of the ignition plug by the upward flow F12, and a stratified air-fuel mixture is formed around the ignition plug 10.

Even if the average air-fuel ratio of the stratified air-fuel mixture is lean in the entire combustion chamber, the vicinity of the ignition plug 10 is close to the stoichiometric air-fuel ratio, and reliable ignition and prompt flame propagation are performed. In the present embodiment, by causing the gas flows generated by injection from the first fuel injector 8 and the second fuel injector 9 to collide with each other, an air flow from the piston 3 to the ignition plug 10 is created, and thereby the fuel is carried to the vicinity of the ignition plug 10. Accordingly, the stratified air-fuel mixture can be stably formed against fluctuations in the engine speed and load of the internal combustion engine. As a result, lean burn limit can be expanded, fuel efficiency can be improved, and CO2 and NOx of exhaust gas can be reduced. In addition, smoldering of the ignition plug can be prevented by collecting sufficiently vaporized fuel near the ignition plug.

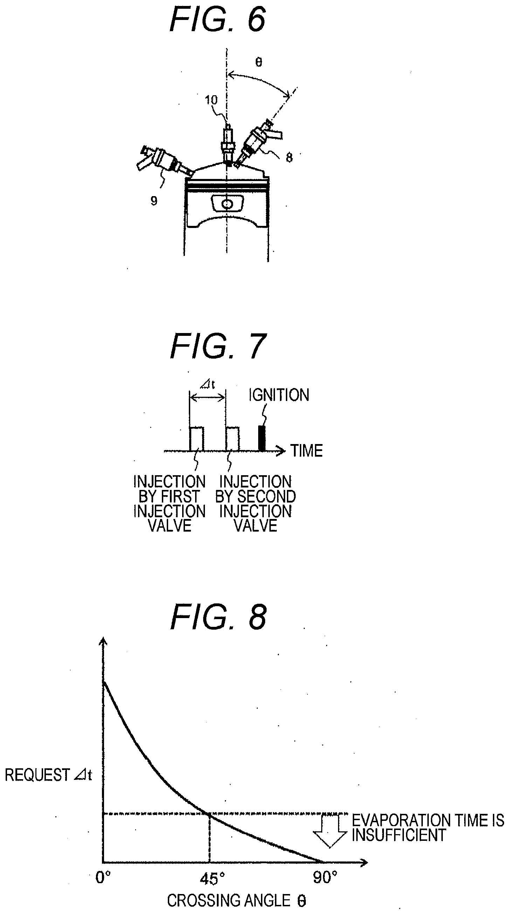

To obtain a stratified air-fuel mixture around the ignition plug by injecting with the second fuel injector following the injection from the first fuel injector before the ignition in the compression stroke, arrangement relation of the first fuel injector and the cylinder central axis is important. The reason will be explained with reference to FIGS. 6 to 10. Note that the fluid injection valve (first fuel injector 8) is provided on an exhaust side of the intake pipe 4 of the internal combustion engine, and the fuel injection valve (second fuel injector 9) is provided in the intake side of the exhaust pipe 5 of the internal combustion engine. Further, as illustrated in FIG. 6, it is preferable that these fluid injection valves and the fuel injection valves are disposed in the direction toward the center of the upper surface of the piston 3. Further, it is desirable that the fluid injection valve be attached to an upper portion of the internal combustion engine, and the fuel injection valve be attached to a side face of the internal combustion engine. Furthermore, by making the fluid injection valve the same shape as the fuel injection valve, it is possible to reduce the production cost.

As illustrated in FIG. 6, the crossing angle between the center axis of the first fuel injector 8 and the cylinder central axis is defined as θ. Further, as illustrated in FIG. 7, the time difference between the injection start timing by the first fuel injector and the injection start timing by the second fuel injector is defined as Δt. FIG. 8 illustrates a relationship between the crossing angle θ and the request Δt in the formation of the stratified air-fuel mixture according to the present embodiment. Here, the request Δt is necessary Δt for forming the stratified air-fuel mixture around the ignition plug. The request Δt takes a maximum value at the crossing angle θ = 0° and becomes substantially zero at the crossing angle θ = 90°.

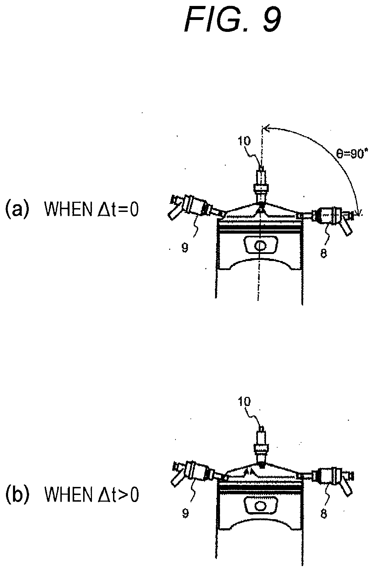

As illustrated in FIG. 9(a), at the crossing angle θ = 90°, the first fuel injector 8 and the second fuel injector 9 are substantially opposed to each other, and it is necessary to inject fuel from both fuel injectors almost simultaneously to form an upward flow near the ignition plug by interference of gas flow caused by injection from both fuel injectors. At the crossing angle θ = 90°, when the injection from the second fuel injector is delayed from the injection from the first fuel injector (that is, when Δt > 0), as illustrated in FIG. 9(b), since the position where the upward flow is formed is closer to the second fuel injector 9 than the position of the ignition plug, a stratified air-fuel mixture cannot be formed around the ignition plug.

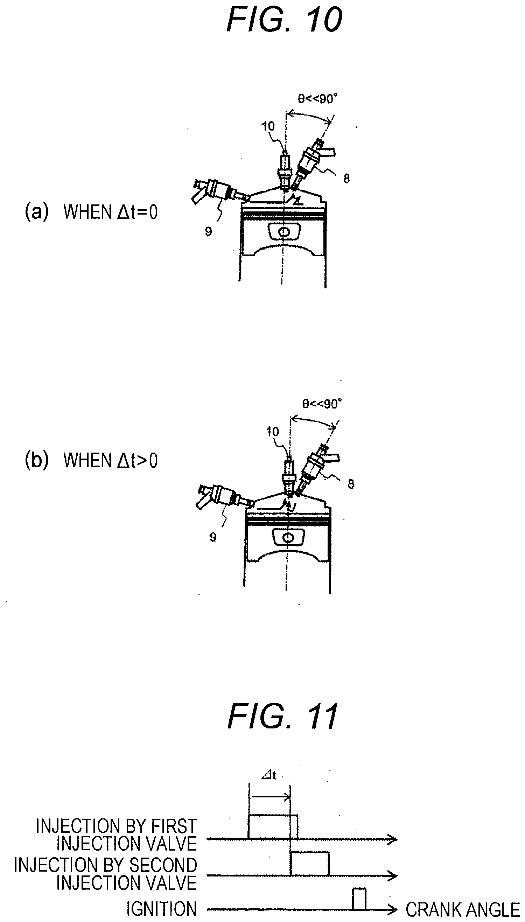

When the crossing angle θ becomes smaller than 90°, the jet generated by the injection from the first fuel injector 8 collides with the upper surface of the piston. Therefore, as the crossing angle θ decreases, the speed of the air flow toward the second fuel injector 9 becomes slow along the piston surface by the injection from the fuel injector 8. For example, as illustrated in FIG. 10(a), if Δt = 0 when the crossing angle θ << 90°, the speed of the air flow toward the second fuel injector 9 along the piston surface by the injection from the fuel injector 8 becomes slower than the speed of the air flow toward the first fuel injector 8 along the surface of the piston by the injection from the fuel injector 9. For this reason, the position where the upward flow is formed is located closer to the first fuel injector 8 than the position of the ignition plug, such that a stratified air-fuel mixture cannot be formed around the ignition plug. Assuming that Δt > 0 is satisfied, as illustrated in FIG. 10(b), the upward flow is generated at the ignition plug position by the gas flow generated by both injections, and a stratified air-fuel mixture is formed around the ignition plug.

On the other hand, since it takes time to vaporize a spray fuel injected from the fuel injector, if stratification is made around the ignition plug under the condition that Δt is short (that is, the condition where the crossing angle θ is large), unvaporized fuel reach much at the ignition plug. This may lead to smoldering of the ignition plug and generation of soot. Therefore, to stratify the fuel vaporized around the ignition plug, it is necessary to reduce the crossing angle θ to some extent, and it is desirable that the crossing angle θ be in the range of 0 to 45°.

In the present embodiment, during the lean burn operation, as illustrated in FIG. 11, the injection period by the first fuel injector and the injection period by the second fuel injector may partially overlap. If there is a delay in the injection start timing of the second fuel injector with respect to the injection start timing by the first fuel injector, it is possible to form a stratified air-fuel mixture by generating an upward flow near the ignition plug by mutual interference of the air flow generated by the first fuel injector and the air flow generated by the second fuel injector.

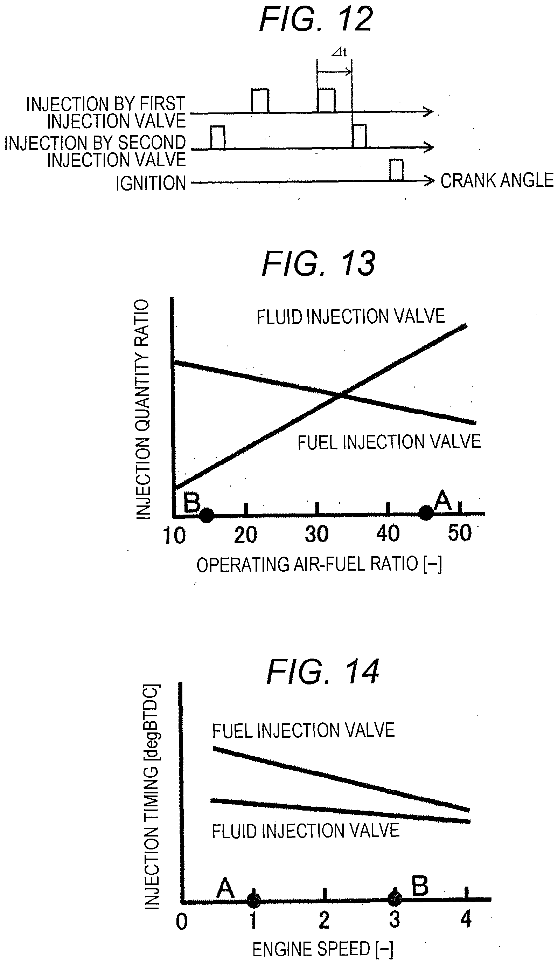

Further, in the present embodiment, in the lean burn operation, the fuel injection by the second fuel injector is performed at a timing before the ignition timing and closest to the ignition timing, and the fuel injection by the first fuel injection valve is performed at a timing before the ignition timing and second closest to the ignition timing. As long as this condition is satisfied, injection other than these may be accompanied with ignition as illustrated in FIG. 12, and the injection timing and the injection order of the first fuel injector and the second fuel injector are not limited.

Further, in the present embodiment, as illustrated in FIG. 13, the control unit control the fluid injection valve and the fuel injection valve such that a ratio of fluid injection from the fluid injection valve (first fuel injector 8) to fuel injection from the fuel injection valve (second fuel injector 9) as the air-fuel ratio of the internal combustion engine increases. That is, when the amount of fuel pushed up in the direction of the ignition plug 10 under the air-fuel ratio rich condition increases, excess fuel richness and deterioration of PN are caused. Therefore, by decreasing the injection ratio of the fluid injection valve as the air-fuel ratio decreases, the above-described effect of pushing up the fuel is reduced.

Further, in the present embodiment, as illustrated in FIG. 14, the control unit controls the fluid injection valve and the fuel injection valve so as to reduce the difference between the injection timing of the fluid injection valve (first fuel injector 8) and the injection timing of the fuel injection valve (second fuel injector 9) as the engine speed of the internal combustion engine increases.

### Reference Signs List

1 cylinder head
2 cylinder block
3 piston
4 intake pipe
5 exhaust pipe
6 intake valve
7 exhaust valve
8 first fuel injector
9 second fuel injector
10 ignition plug
11 ignition coil
12 fuel tank
13 feed pump
14 high-pressure fuel pump
15 common rail
16 fuel pressure sensor
17 connecting rod
18 crank shaft
19 crank angle sensor
20 water temperature sensor
21 collector
22 engine control unit
S1 fuel injected by first fuel injector
S2 fuel injected by second fuel injector
F1 gas flow due to injection from first fuel injector
F2 gas flow due to injection from second fuel injector
F13 upward flow caused by first fuel injector and second
fuel injector injection
M12 air-fuel mixture

## Claims

1. An internal combustion engine control device for controlling an internal combustion engine,
the internal combustion engine comprising: a fluid injection valve provided along an axial direction of an ignition plug; and a fuel injection valve formed separately from the fluid injection valve and provided in a direction intersecting with the axial direction of the fluid injection valve,
the internal combustion engine control device comprising a control unit configured to control the fluid injection valve and the fuel injection valve so as to inject fluid from the fuel injection valve after injecting fluid from the fluid injection valve in a compression stroke.

2. An internal combustion engine control device for controlling an internal combustion engine,
the internal combustion engine comprising: a fluid injection valve provided adjacent to an ignition plug; and a fuel injection valve formed separately from the fluid injection valve and provided in a direction intersecting with an axial direction of the fluid injection valve,
the internal combustion engine control device comprising a control unit configured to control the fluid injection valve and the fuel injection valve so as to inject fluid from the fuel injection valve after injecting fluid from the fluid injection valve in a compression stroke.

3. The internal combustion engine control device according to claim 1 or 2,
wherein the control unit controls the fluid injection valve and the fuel injection valve so as to inject fluid from the fuel injection valve after fluid is injected from the fluid injection valve in a case where the internal combustion engine is operated with an air-fuel mixture leaner than the stoichiometric mixture ratio and in a compression stroke of the internal combustion engine.

4. The internal combustion engine control device according to claim 1 or 2,
wherein an angle formed by the axial direction of the fluid injection valve and a cylinder central axial direction is in a range of 0 to 45°.

5. The internal combustion engine control device according to claim 1 or 2,
wherein fuel injection from the fuel injection valve is performed at a timing before an ignition timing of the ignition plug, and fluid injection from the fluid injection valve is performed at a timing before the ignition timing and the fuel injection from the fuel injection valve.

6. The internal combustion engine control device according to claim 1,
wherein the control unit controls the fluid injection valve and the fuel injection valve such that a ratio of fluid injection from the fluid injection valve to fuel injection injected from the fuel injection valve as an air-fuel ratio of the internal combustion engine increases.

7. The internal combustion engine control device according to claim 1,
wherein the control unit controls the fluid injection valve and the fuel injection valve such that a difference in an injection timing of the fluid injection valve with respect to an injection timing of the fuel injection valve decreases as an engine speed of the internal combustion engine increases.

8. The internal combustion engine control device according to claim 1,
wherein the fluid injection valve is provided on an exhaust side with respect to an intake pipe of the internal combustion engine, and the fuel injection valve is provided on an intake side with respect to an exhaust pipe of the internal combustion engine.

9. The internal combustion engine control device according to claim 1,
wherein the fluid injection valve and the fuel injection valve are disposed in a direction toward a center portion of the piston.

10. The internal combustion engine control device according to claim 1,
wherein the fluid injection valve is attached to an upper portion of the internal combustion engine, and the fuel injection valve is attached to a side surface of the internal combustion engine.

11. The internal combustion engine control device according to claim 1,
wherein the fluid injection valve is a fuel injection valve having the same shape as the fuel injection valve.
